# EUROPÄISCHE PATENTANMELDUNG

(11) **EP 1 643 405 A1**
(43) Veröffentlichungstag der Anmeldung: **05.04.2006**
(21) Anmeldenummer: 05106726.2
(22) Anmeldetag: 21.07.2005
(51) Int. Cl.: G06F 21/00

(54) **Manipulationsgeschütztes Mikroprozessorsystem und Betriebsverfahren dafür**

(30) Priorität: 29.09.2004 DE 102004047191
(71) Anmelder: ROBERT BOSCH GMBH, 70442 Stuttgart (DE)
(72) Erfinder: Ceskutti, Holger, 74219 Moeckmuehl (DE); Seyfang, Robert, 74379 Ingersheim (DE); Loechel, Norbert, 71120 Grafenau (DE); Rieth, Bernd, 74321 Bietigheim-Bissingen (DE); Borchert, Andre, 71229 Leonberg (DE)

(57) **Zusammenfassung**

Ein manipulationsgeschütztes Mikroprozessorsystem umfasst einen Mikroprozessor (1), einen mit dem Mikroprozessor (1) in einem gemeinsamen Baustein (3) integrierten internen Schreib-Lesespeicher (2) und einen zweiten Speicher (6), in dem wenigstens ein Teil eines von dem Mikroprozessor (1) auszuführenden Betriebsprogramms (8) gespeichert ist. Wenigstens eine für die Funktion des Mikroprozessorsystems unverzichtbare Prozedur des Betriebsprogramms ist verschlüsselt in dem externen Speicher (6) gespeichert. Das Betriebsprogramm umfasst eine Entschlüsselungsprozedur (10), die ausgelegt ist, um jede verschlüsselte Prozedur (9) des Betriebsprogramms (8) zu entschlüsseln und in dem internen Schreib-Lesespeicher (2) zu speichern. Die unverzichtbare Prozedur setzt zum ordnungsgemäßen Funktionieren eine erfolgreiche Durchführung einer Integritätsprüfprozedur voraus, die die Integrität wenigstens eines Teils des Betriebsprogramms prüft.

## Beschreibung

### Stand der Technik

Die vorliegende Erfindung betrifft ein Mikroprozessorsystem mit einem Mikroprozessor und einem Speicher, in dem ein von dem Mikroprozessor auszuführendes Betriebsprogramm gespeichert ist. Wenn derartige Mikroprozessorsysteme zur Steuerung eines Gerätes eingesetzt werden, ist es zum Gewährleisten der Betriebssicherheit des gesteuerten Gerätes wichtig, das Betriebsprogramm vor unbefugter Manipulation zu schützen. Insbesondere bei Mikroprozessorsystemen für Kraftfahrzeuganwendungen wird oft von Unbefugten versucht, Betriebsprogrammdaten, seien es die Anweisungen des Programms selbst oder Parameter, auf welche das Betriebsprogramm zugreift, zu manipulieren, um so z.B. die Leistung eines von dem Mikroprozessorsystem gesteuerten Motors zu steigern. Solche vom Fahrzeugkonstrukteur nicht vorgesehenen Leistungssteigerungen können die Betriebssicherheit des Fahrzeugs gefährden, zu einer Verkürzung der Lebensdauer des Motors oder Getriebes führen oder die Grundlagen für die Straßenverkehrszulassung des Fahrzeugs in Frage stellen.

Es sind Verfahren bekannt, mit denen sich die Integrität einer Datenmenge wie etwa der Programmdaten des Betriebsprogramms oder von Teilen derselben überprüfen lässt, wie etwa das Berechnen einer Prüfsumme und deren Vergleich mit einem vorab gespeicherten Sollwert. Diese Prüfverfahren sind jedoch bekannt, und ihre Ergebnisse sind gut nachvollziehbar, so dass es für einen erfahrenen Manipulierer nicht sonderlich schwierig ist, nicht nur die Programmdaten, sondern auch den gespeicherten Sollwert der Prüfsumme so zu manipulieren, dass die Manipulation durch die Prüfsummenberechnung nicht mehr erkennbar ist. Außerdem besteht die Möglichkeit, dass ein Manipulierer in einem Betriebsprogramm die Integritätsprüfprozedur identifiziert und das Betriebsprogramm so abändert, dass die Prüfprozedur nicht mehr ausgeführt wird, oder sie in ihrem Ablauf so verändert, dass sie keine Manipulation mehr anzeigt.

Eine andere Möglichkeit, die Manipulationssicherheit eines Mikroprozessorsystems zu verbessern, ist, den Mikroprozessor mit einem Speicher in einem Schaltungsbaustein zu integrieren, so dass Datenleitungen, über die der Mikroprozessor mit dem Speicher kommuniziert, ohne Zerstörung des Gehäuses des Bausteins nicht von außen zugänglich sind. Dies macht es für einen Manipulierer erheblich schwieriger, das Betriebsprogramm aus dem Speicher zu lesen, und folglich auch, es zu verändern. Nachteilig bei diesem Ansatz ist jedoch, dass der mit dem Mikroprozessor in einem Baustein integrierte Speicherplatz erheblich teurer ist als Speicherplatz auf einem separaten Baustein, so dass diese Art der Sicherung ziemlich kostenaufwändig ist.

### Vorteile der Erfindung

Durch die vorliegende Erfindung wird ein Mikroprozessorsystem und Betriebsverfahren für ein Mikroprozessorsystem geschaffen, die einen wirksamen Schutz gegen Manipulation von Betriebsprogrammdaten mit geringem Kostenaufwand ermöglichen.

Das erfindungsgemäße Mikroprozessorsystem gemäß Anspruch 1 benötigt den mit dem Mikroprozessor in einem gemeinsamen Baustein integrierten internen Speicher in erster Linie nur, um darin eine für die Funktion des Mikroprozessorsystems unverzichtbare Prozedur des Betriebsprogramms in entschlüsselter Form zu speichern, die verschlüsselt an einer weitgehend beliebigen Stelle des Mikroprozessorsystems, als zweiter Speicher bezeichnet, gespeichert sein darf, die vor Manipulation weniger geschützt ist als der interne Speicher. Die entschlüsselte unverzichtbare Prozedur ist in dem internen Speicher vor unbefugtem Zugriff besser geschützt als in dem zweiten Speicher. Da die unverzichtbare Prozedur nur dann ordnungsgemäß funktioniert, wenn die Integritätsprozedur erfolgreich durchgeführt worden ist, ist sichergestellt, dass das Mikroprozessorsystem nach einer Manipulation des von der Integritätsprüfprozedur geprüften Teils des Betriebsprogramms nicht mehr funktioniert, so dass Manipulationsversuche erfolglos bleiben.

Der Grund für das Nichtfunktionieren des Mikroprozessorsystems nach einer Manipulation ist für einen Manipulierer nur schwer erkennbar, da die ordnungsgemäße Programmausführung nicht bereits während der Integritätsprüfprozedur selber endet, sondern während der unverzichtbaren Prozedur, deren Code der Manipulierer nicht einsehen kann. Es ist daher schwierig für ihn, in der Gesamtheit des Codes des Mikroprozessors die Integritätsprüfprozedur überhaupt zu identifizieren, und solange er sie nicht identifiziert hat, kann er sie auch nicht manipulieren.

Der interne Speicher, der jede entschlüsselte Prozedur aufnimmt, ist vorzugsweise ein flüchtiger Speicher, so dass sein Inhalt beim Ausschalten des Mikroprozessorsystems verloren geht und folglich nicht gelesen werden kann, wenn der gemeinsame Baustein von Prozessor und internem Speicher stromlos ist oder nach der letzten Entschlüsselung stromlos gewesen ist.

Der zweite Speicher kann in einem bezüglich des Bausteins des Mikroprozessors externen Baustein untergebracht sein. In diesem Fall besteht im Allgemeinen die Möglichkeit, den Inhalt des zweiten Speichers durch Abhorchen des Datenverkehrs zwischen den Bausteinen herauszufinden. Alternativ könnte der zweite Speicher ein nichtflüchtiger Speicher, etwa ein Flash-Speicher, des Mikroprozessor-Bausteins sein. Dessen Inhalt könnte eventuell auch nach Öffnen des Gehäuses des Bausteins noch lesbar sein.

Üblicherweise genügt als Ergebnis der Integritätsprüfprozedur die binäre Aussage, ob die auf Integrität geprüften Daten manipuliert sind oder nicht. Um jedoch die Integritätsprüfprozedur mit der unverzichtbaren Prozedur möglichst manipulationssicher zu verzahnen, ist bevorzugt, dass die Integritätsprüfprozedur ein mehrere Bit breites Ergebnis liefert, und dass die unverzichtbare Prozedur eingerichtet ist, um nur dann korrekt zu arbeiten, wenn ihr ein korrektes Ergebnis der Integritätsprüfprozedur als Eingabewert zur Verfügung steht. Die Verarbeitung des Ergebnisses der Integritätsprüfprozedur, die von der unverzichtbaren Prozedur vorgenommen wird, kann einfach in einem Vergleich dieses Ergebnisses mit einem Sollwert bestehen; je höher die Bitzahl des Ergebnisses ist, um so geringer ist die Wahrscheinlichkeit, dass eine Manipulation das Ergebnis der Integritätsprüfprozedur unverändert lässt und deshalb unerkannt bleibt.

Die unverzichtbare Prozedur ihrerseits kann eingerichtet sein, um bei Nichtübereinstimmung des Ergebnisses der Prüfprozedur mit dem Sollwert überhaupt kein Ergebnis zurückzuliefern, so dass eine Prozedur, welche die unverzichtbare Prozedur aufruft und deren Ergebnis benötigt, um weiter zu arbeiten, auf unbestimmte Zeit unterbrochen wird.

Alternativ kann die unverzichtbare Prozedur so ausgelegt sein, dass sie nur dann ein korrektes Ergebnis liefert, wenn sie das korrekte Ergebnis der letzten Integritätsprüfprozedur als Eingabewert empfangen hat, insbesondere also, wenn der von ihr durchgeführte Vergleich des Ergebnisses der Prüfprozedur mit dem Sollwert eine Übereinstimmung ergibt. Indem die unverzichtbare Prozedur andernfalls falsche Ergebnisse zurückliefert, wird die Funktionsfähigkeit des Mikroprozessorsystems blockiert. Da die Programmausführung aber nicht unmittelbar in der unverzichtbaren Prozedur abbricht, ist letztere für einen Manipulierer nicht einmal ohne weiteres als Ursache der Funktionsstörung zu erkennen.

Eine weitere Verbesserung der Sicherheit wird erreicht, wenn jede verschlüsselt in dem externen Speicher gespeicherte Prozedur asymmetrisch verschlüsselt ist, d.h., wenn zu ihrer Verschlüsselung ein geheimer Schlüssel verwendet ist, der von einem von der Entschlüsselungsprozedur zum Entschlüsseln benutzten öffentlichen Schlüssel verschieden ist. So kann ein Manipulierer, selbst wenn es ihm gelingt, den entschlüsselten Code der unverzichtbaren Prozedur zu lesen und abzuändern, und den zu ihrer Entschlüsselung verwendeten Schlüssel herauszufinden, den geänderten Code nicht wieder verschlüsseln, um damit die ursprüngliche verschlüsselte Prozedur zu ersetzen.

Es sind daher keine großen Anstrengungen erforderlich, um den öffentlichen Schlüssel und die ihn verwendende Entschlüsselungsprozedur vor dem Zugriff eines Manipulierers zu schützen. Sie können daher in dem preiswerten externen Speicher untergebracht werden.

Um in der Integritätsprüfprozedur eine Manipulation mit größtmöglicher Sicherheit zu erkennen, kann die Integritätsprüfprozedur im Wesentlichen aus einer Datenkompressionsprozedur, gegebenenfalls in Kombination mit weiteren vorhergehenden oder nachfolgenden Verarbeitungsschritten, bestehen. Wenn die Kompressionsprozedur ohne Informationsverlust umkehrbar ist, ist gewährleistet, dass jede mögliche Manipulation an den von der Prüfprozedur erfassten Daten zu einer Änderung des Ergebnisses der Prüfprozedur führt und somit erkannt wird. In der Praxis genügt es jedoch, wenn die Wahrscheinlichkeit, dass eine Manipulation erkannt wird, hoch genug ist, um den Versuch der Manipulation unattraktiv zu machen; d.h. Informationsverlust kann in Kauf genommen werden.

Ein weiterer Zuwachs an Sicherheit kann erreicht werden, wenn nicht nur die unverzichtbare Prozedur sondern auch die Integritätsprüfprozedur in verschlüsselter Form gespeichert ist und wie erstere vor ihrer Ausführung entschlüsselt und in den internen Speicher geladen werden muss.

### Figuren

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Blockdiagramm eines erfindungsgemäßen Mikroprozessorsystems; und
- Fig. 2: ein Flussdiagramm eines von dem Mikroprozessorsystem ausgeführten Arbeitsverfahrens.

### Beschreibung der Ausführungsbeispiele

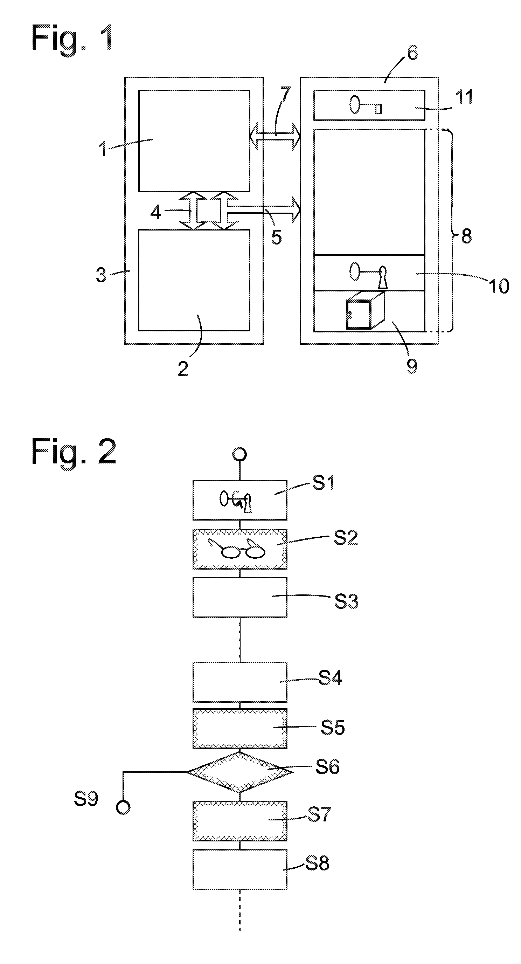

In Fig. 1 ist mit 1 ein Mikroprozessor eines Motorsteuergeräts für ein Kraftfahrzeug bezeichnet. Der Mikroprozessor 1 ist zusammen mit einem flüchtigen Schreib-Lesespeicher 2 in einem gemeinsamen Halbleiterbaustein 3 integriert und kommuniziert mit dem Schreib-Lesespeicher 2 über einen Datenbus 4 und einen Adressbus 5.

Für die Kommunikation des Mikroprozessors 1 mit einem externen Speicherbaustein 6 ist ein zweiter Datenbus 7 aus dem Halbleiterbaustein 3 herausgeführt. Dieser zweite Datenbus 7 ist von dem ersten Datenbus 4 galvanisch getrennt, so dass zwischen dem Mikroprozessor 1 und dem internen Schreib-Lesespeicher 2 ausgetauschte Daten außerhalb des Bausteins 3 nicht abgreifbar sind.

Der externe Speicherbaustein 6 enthält im Wesentlichen ein Betriebsprogramm 8 des Mikroprozessors 1, darunter ein Teil 9 in asymmetrisch verschlüsselter Form und eine Entschlüsselungsprozedur 10. Des weiteren enthält der Speicherbaustein 6 einen öffentlichen Schlüssel 11, den die Entschlüsselungsprozedur 10 zum Entschlüsseln des verschlüsselten Teils 9 benötigt, der aber nicht für die zu der Entschlüsselung inversen Verschlüsselung brauchbar ist.

Bei Inbetriebnahme des Mikroprozessorsystems beginnt der Mikroprozessor 1 , das Betriebsprogramm 8 aus dem externen Speicher 6 zu lesen und auszuführen. In einer Initialisierungsphase des Betriebsprogramms wird auch die Entschlüsselungsprozedur 10 ausgeführt (Schritt S1), die den verschlüsselten Teil 9 liest, mit Hilfe des Schlüssels 11 entschlüsselt und das Ergebnis der Entschlüsselung in dem Schreib-Lesespeicher 2 ablegt. Durch die Entschlüsselung wird im Schreib-Lesespeicher 2 wenigstens eine ausführbare Prozedur erhalten, die für die eigentliche Aufgabe des Mikroprozessorsystems unabdingbar ist. Eine solche unabdingbare Prozedur kann bei einem Motorsteuergerät beispielsweise die Erfassung der Motordrehzahl oder eines anderen wichtigen Betriebsparameters des Motors beinhalten.

Die Integritätsprüfprozedur ist einer ertsen Ausgestaltung der Erfindung zufolge in dem externen Speicher 6 in unmittelbar vom Mikroprozessor 1 ausführbarer Form gespeichert; bei einer zweiten Ausgestaltung ist vorgesehen, dass auch sie in dem Teil 9 des Speichers 6 verschlüsselt ist und zu ihrer Ausführung vorab durch die Prozedur 10 entschlüsselt und im internen Speicher 2 abgespeichert wird.

Nach der Entschlüsselung wird die Integritätsprüfprozedur ausgeführt (Schritt S2). Das Ergebnis der Integritätsprüfprozedur, die an sich von beliebiger bekannter Art sein kann, sind ein oder mehrere Datenwörter mit einer jeweils der Breite des Datenbusses 4 bzw. 7 entsprechenden, von dem Mikroprozessor 1 effizient zu handhabenden Breite. Dieses Ergebnis wird wie das der Entschlüsselung im Schreib-Lesespeicher 2 abgelegt.

Es können sich nun im Prinzip beliebige Schritte S3, ... S4 anschließen, bis in Schritt S5 erstmals begonnen wird, die unverzichtbare Prozedur auszuführen. Die Programmanweisungen dieser Prozedur werden wie im Falle der besagten zweiten Ausgestaltung auch die der Integritätsprüfung S2 aus dem vor Manipulation und unbefugtem Zugriff geschützten internen Speicher 2 gelesen, was in Fig. 2 jeweils durch schraffierte Rahmen der entsprechenden Verfahrensschritte symbolisiert ist.

An irgendeiner Stelle der unverzichtbaren Prozedur findet ein Vergleich S6 zwischen dem Ergebnis der Integritätsprüfung und einem Sollwert statt, welcher als Konstante in den Programmdaten der unverzichtbaren Prozedur enthalten und zusammen mit diesen aus dem verschlüsselten Teil 9 entschlüsselt worden ist. Wenn eine Übereinstimmung zwischen dem Ergebnis der Integritätsprüfung und dem erwarteten Wert festgestellt wird, wird die unverzichtbare Prozedur im Schritt S7 fortgesetzt, und ein korrektes Ergebnis der unverzichtbaren Prozedur wird an eine Prozedur, von der sie aufgerufen worden ist, zurückgegeben, so dass das Mikroprozessorsystem korrekt arbeitet und die aufrufende Prozedur in Schritt S8 fortgesetzt wird. Wenn in Schritt S6 jedoch eine Nichtübereinstimmung festgestellt wird, verzweigt das Verfahren zu Schritt S9. Dieser Schritt kann darin bestehen, dass der Mikroprozessor 1 in einen Haltezustand oder eine Endlosschleife versetzt wird, so dass die unverzichtbare Prozedur überhaupt kein Ergebnis zurückliefert und der Betrieb des Mikroprozessorsystems zum Erliegen kommt. Denkbar ist auch, in Schritt S9 ein Ergebnis zurückzugeben, das von der es empfangenden Prozedur als fehlerhaft erkannt und abgefangen wird.

Im Falle der zweiten Ausgestaltung hat ein Manipulierer keine Möglichkeit, in dem verschlüsselten Teil 9 Daten, die zu der Integritätsprüfprozedur bzw. der unverzichtbaren Prozedur gehören, voneinander zu unterscheiden, die Entschlüsselung der unverzichtbaren Prozedur und ihre Speicherung im internen Speicher 2 aber nicht unterbunden werden kann, ohne das gesamte Mikroprozessorsystem inoperabel zu machen, muss auch die Integritätsprüfprozedur mit entschlüsselt und in den internen Speicher 2 geschrieben werden. Da die unverzichtbare Prozedur nur dann korrekt arbeitet, wenn die Integritätsprüfung erfolgreich gewesen ist, ist es für einen Angreifer sinnlos, die Integritätsprüfung zu unterdrücken.

## Patentansprüche

1. Mikroprozessorsystem mit einem Mikroprozessor (1), einem mit dem Mikroprozessor (1) in einem gemeinsamen Baustein (3) integrierten internen Schreib-Lesespeicher (2) und einem zweiten Speicher (6), in dem wenigstens ein Teil eines von dem Mikroprozessor (1) auszuführenden Betriebsprogramms (8) gespeichert ist, und einer in dem Mikroprozessorsystem gespeicherten Integritätsprüfprozedur zum Prüfen der Integrität wenigstens eines Teils des Betriebsprogramms (8),
**dadurch gekennzeichnet, dass** wenigstens eine für die Funktion des Mikroprozessorsystems unverzichtbare Prozedur des Betriebsprogramms (8) verschlüsselt in dem zweiten Speicher (6) gespeichert ist, dass das Betriebsprogramm (8) eine Entschlüsselungsprozedur (10) umfasst, die ausgelegt ist, um jede verschlüsselte Prozedur (9) des Betriebsprogramms (8) zu entschlüsseln und in dem internen Schreib-Lesespeicher (2) zu speichern, und dass die unverzichtbare Prozedur, um ordnungsgemäß zu funktionieren, eine erfolgreiche Durchführung der Integritätsprüfprozedur voraussetzt.

2. Mikroprozessorsystem nach Anspruch 1, **dadurch gekennzeichnet, dass** der zweite Speicher (6) ein bezogen auf den Baustein (3) des Mikroprozessors (1) externer Speicher ist.

3. Mikroprozessorsystem nach Anspruch 1, **dadurch gekennzeichnet, dass** der interne Speicher (2) ein flüchtiger Speicher ist.

4. Mikroprozessorsystem nach Anspruch 3, **dadurch gekennzeichnet, dass** der zweite Speicher (6) ein interner nichtflüchtiger Speicher des Bausteins (3) ist.

5. Mikroprozessorsystem nach einem der vorhergehenden Ansprüche, **dadurch gekennzeichnet, dass** die Integritätsprüfprozedur ein mehrere Bit breites Ergebnis liefert, und dass die unverzichtbare Prozedur eingerichtet ist, um nur dann korrekt zu arbeiten, wenn ihr ein korrektes Ergebnis der Integritätsprüfprozedur als Eingabewert zur Verfügung steht.

6. Mikroprozessorsystem nach Anspruch 5, **dadurch gekennzeichnet, dass** die unverzichtbare Prozedur einen Vergleich des Ergebnisses der Prüfprozedur mit einem Sollwert umfasst und eingerichtet ist, um nur bei Übereinstimmung von Ergebnis und Sollwert ein korrektes Ergebnis zu liefern.

7. Mikroprozessorsystem nach Anspruch 5, **dadurch gekennzeichnet, dass** die unverzichtbare Prozedur eingerichtet ist, nur dann ein Ergebnis an eine aufrufende Prozedur zurückzugeben, wenn das Ergebnis der Prüfprozedur mit dem Sollwert übereinstimmt.

8. Mikroprozessorsystem nach einem der vorhergehenden Ansprüche, **dadurch gekennzeichnet, dass** die verschlüsselt im externen Speicher gespeicherten Prozeduren asymmetrisch verschlüsselt sind.

9. Mikroprozessorsystem nach Anspruch 8, **dadurch gekennzeichnet, dass** ein öffentlicher Schlüssel (11) für die Entschlüsselung der verschlüsselt gespeicherten Prozeduren im externen Speicher (6) gespeichert ist.

10. Mikroprozessorsystem nach einem der vorhergehenden Ansprüche, **dadurch gekennzeichnet, dass** die Integritätsprüfprozedur eine Datenkompressionsprozedur umfasst.

11. Mikroprozessorsystem nach einem der vorhergehenden Ansprüche, **dadurch gekennzeichnet, dass** die Integritätsprüfprozedur im zweiten Speicher (6) verschlüsselt gespeichert ist.

12. Verfahren zur Integritätssicherung von gespeicherten Daten in einem Mikroprozessorsystem mit einem Mikroprozessor (1), einem mit dem Mikroprozessor in einem gemeinsamen Baustein (3) integrierten internen Schreib-Lesespeicher (2) und einem zweiten Speicher (6), in dem wenigstens ein Teil eines von dem Mikroprozessor auszuführenden Betriebsprogramms gespeichert ist, mit den Schritten:
a) Entschlüsseln (S1) wenigstens einer für die Funktion des Mikroprozessorsystems unverzichtbaren Prozedur des Betriebsprogramms, wobei die Prozedur verschlüsselt in dem externen Speicher (6) gespeichert ist, und Speichern der unverzichtbaren Prozedur in entschlüsselter Form in dem internen Speicher (2);
b) Durchführen einer Integritätsprüfprozedur (S2) zum Prüfen der Integrität wenigstens eines Teils des Betriebsprogramms;
c) Vergleichen (S6) des Ergebnisses der Integritätsprüfprozedur mit einem Sollwert, und
d) Blockieren (S9) der unverzichtbaren Prozedur bei Nichtübereinstimmung des Ergebnisses der Integritätsprüfprozedur mit einem erwarteten Ergebnis.
